# EUROPEAN PATENT APPLICATION

(11) **EP 0 924 953 A2**
(43) Date of publication of application: **23.06.1999**
(21) Application number: 98309813.8
(22) Date of filing: 01.12.1998
(51) Int. Cl.: H04Q 11/04

(54) **Method and apparatus for providing a selectable speed data link in a telecommunication system**

(30) Priority: 16.12.1997 US 991796
(71) Applicant: LUCENT TECHNOLOGIES INC., Murray Hill, New Jersey 07974-0636 (US)
(72) Inventor: Reveles, Frank Manuel, Aurora, Illinois 60504 (US); Sallese, Kevin Ernest, Plainfield, Illinois 60544 (US); Wilde, Charles Joseph, Naperville, Illinois 60565 (US)
(74) Representative: Buckley, Christopher Simon Thirsk

(57) **Abstract**

A method and apparatus to provide selectable speed data links (206_{O}-206_{N}) from a switch fabric (202), such as a time slot interchanger, to multiple protocol handlers (210_{O}-210_{N}). New, higher rates give the advantage of faster information exchange and the original rates allow compatibility with previous generation devices.

## Description

### Cross Reference

This application is related to APPARATUS AND METHOD FOR PROVIDING MEMORY ADDRESS INTERCHANGING FOR HIGH SPEED MEMORY ACCESSES, by F. Reveles, K. Sallese and C. Wilde, commonly assigned and filed concurrently herewith.

### Technical Field

The invention relates to transmission of data and more particularly to a method and apparatus for transmission of packets of switched data from a high speed trunk to a lower speed data line.

### Description of the Prior Art

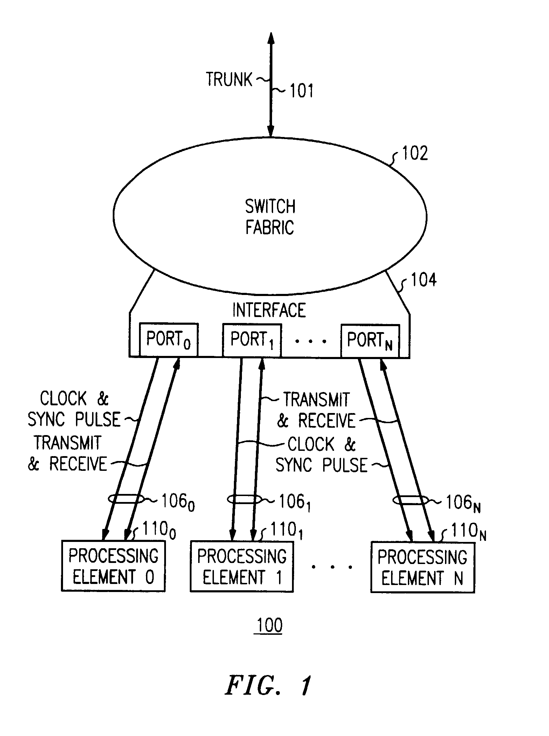

Within known telecommunication systems, such as a 5ESS ® telecommunication switch system, SESS is a registered trademark of Lucent Technologies Inc. of Murray Hill New Jersey, a high speed data trunk communicates with multiple data lines of lesser speed by means of a switch fabric. In such systems, as shown in FIG. 1, a high speed trunk 101 operates at 65 megabits per second and carries data in 768 time slots. Each of the multiple data links to lines 106₀- 106_{N} connects to interface module 104. The time slot data coming from the fabric 102 to the interface module 104 is in parallel format, which provides a very high data rate. The data rate of the interface module 104 is at the lower speed of 4 mega bits per second. This is considerably slower data rate than the high speed trunk 101, the switch fabric 102, and the back plane (not shown) between the switch fabric 102 and the interface module 104. Thus, higher speed data rates to the multiple data lines 106₀- 106_{N} are prevented by the present fixed lower data rate of the interface module 104 and the upstream and downstream connections to interface module 104.

### Summary of the Invention

Briefly stated, in accordance with one aspect of the invention, the above described problem is solved and an advance in the art is provided by an interface module that has selectable higher data rates.

In accordance with one aspect of the invention, the above described problem is solved by an interface module apparatus including a receiving portion and a transmitting portion. The transmitting portion has multiple parity checkers with each parity checker checking parity on a per time slot basis. Also, the receiving portion and the transmitting portion have selectable data rates.

In accordance with another aspect of the invention, the above described problem is solved and an advance in the art is provided by an interface module apparatus for communicating data from a switch fabric to N+1 data links. The interface module apparatus has a receiving portion which receives data from the switch fabric in parallel format and outputs data in serial format. The interface module apparatus also has a transmitting portion which has a multiple parity checkers with each parity checker checking parity on a per time slot basis. Both the receiving portion and the transmitting portion have selectable data rates

### Brief Description of the Drawing

FIG. 1 is a block diagram illustration of a known telecommunication switch system communicating with fixed speed data lines.

FIG. 2 is a block diagram illustration of a telecommunication switch communicating with data lines having selectable speeds.

FIG. 3 is a block diagram of a protocol handler used to receive data for selectable speed data lines.

FIG. 4 is a block diagram of a protocol handler used to transmit data from selectable speed data lines.

### Detailed Description

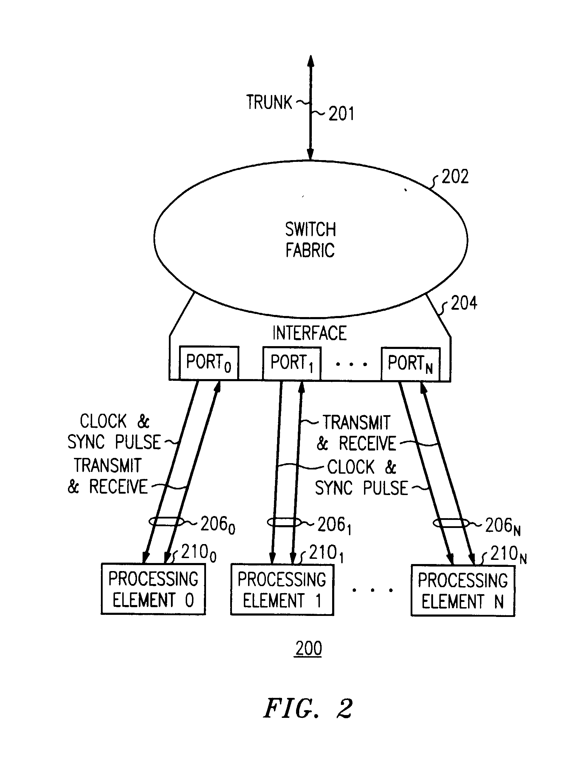

Referring now to FIG. 2, the telecommunications switch 200 has a high speed data trunk 201 connected to a switch fabric 202, which communicates data to and from the trunk 201 in multiple time slots. The switch fabric 202 may be any of many networks such as a space multiplex network, a multiple stage, multiple node network and a time slot interchanger (TSI) network. In a preferred embodiment, fabric 202 is a TSI. The fabric 202 communicates via a parallel bus along a back plane (not shown) to multiple interface module 204. The interface module 204 has multiple ports to which data links 206₀- 206_{N} are connected. The data links 206₀ - 206_{N} are connected to protocol handlers 210₀ - 210_{N} , which are also known as processors. The selectable data speed through interface module 204 allows the data links 206₀-206_{N} to operate at least three selectable data rates. In a preferred embodiment, these rates are 4, 8 and 16 mega bits per second. The interface module 204 connects to separate receive and transmit circuits, as will be explained further, and therefore the data links 206₀- 206_{N} are bi-directional.

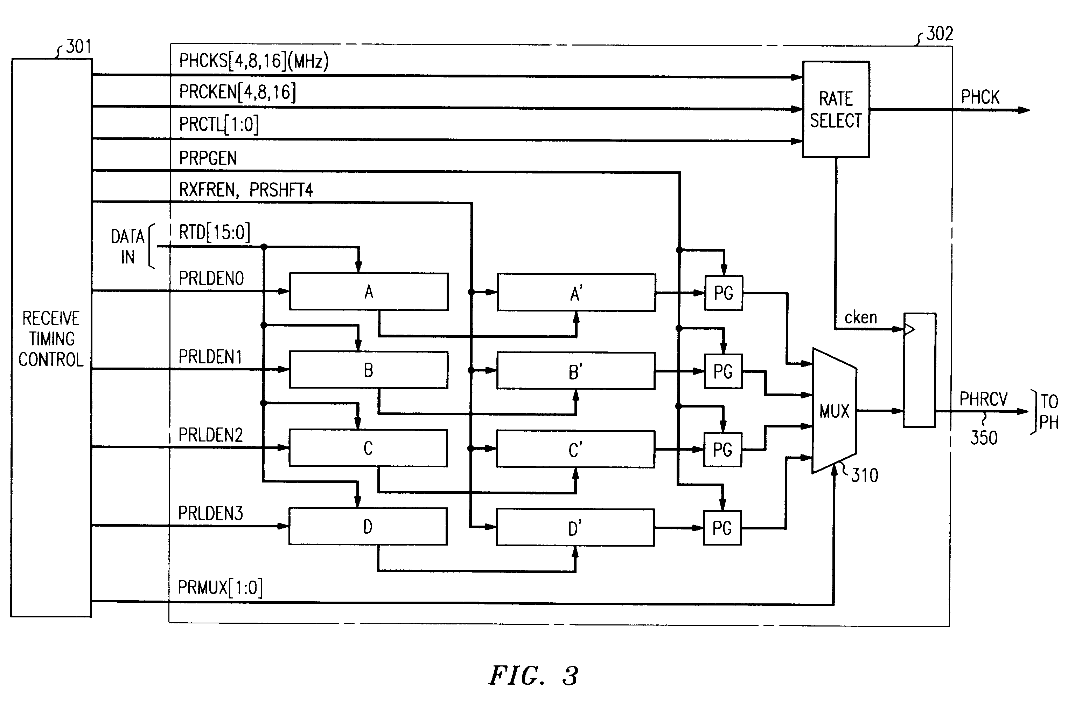

Referring now to FIG. 3, the receive portion, which is defined as the data direction from the fabric to the protocol handlers 210₀ - 210_{N}, of the interface module 204 is shown. The receive portion is referred to as the protocol handler receive port processor or PRPP 302.

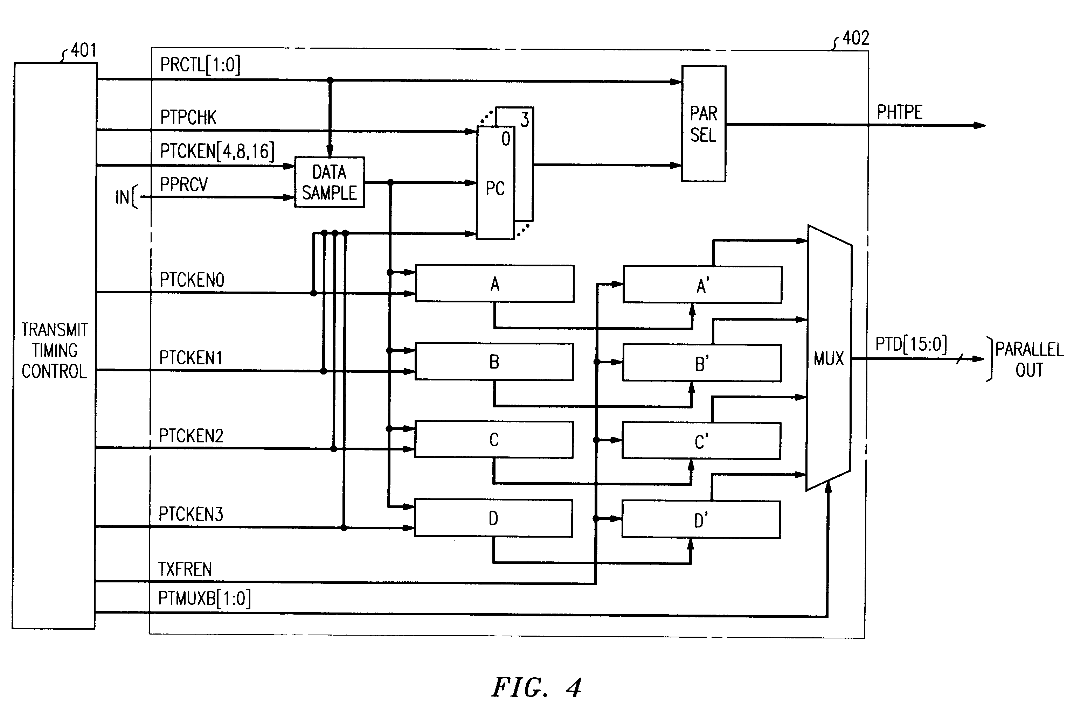

There are 16 PRPPs 302 which correspond to the 16 PHDB port interfaces supported by the interface module, but for simplicity only one is shown in FIG. 3. The PRPPs process data only in the receive direction. Separate corresponding Transmit Port Processors, PTPP 402 are used to process data in the transmit direction, which are shown in FIG. 4 and will be discussed later. The function of each PRPP 302 is to manage the flow of parallel data received from the fabric 202 while converting it from parallel data bits to a serial bit interleaved format at the selected programmed data rate.

The PRPP 302 can be broken down into two functional sub-sections; one that is used for data storage, and a second section that provides a data processing function. Data processing includes bit interleaving of 1/4, 1/2, or all of the received time slot data depending upon the rate programmed for a particular interface module and parity generation. Bit interleaving of a given set of time-slots requires that the whole set be made available when the first bit of the inter-leaved set is to be transmitted. One aspect of this embodiment is the large amount of temporary storage required.

The receive fabric core always runs at the maximum 16 MHz rate supplying 128 time-slots of data to each PRPP 302 per 125 microsec frame regardless of the per port programmed rate. Under control of the receive timing control (RTC) 301, register A is filled for each of the 16 PRPP blocks, followed by register B for each of the 16 PRPP blocks is and so on until all four registers (A-D), of all 16 PRPP blocks, have been supplied with data. Following this, all 4 registers, of each PRPP block, are transferred to their respective prime register A' through D' at the same time and the loading of registers A through D continues for the next group of 4 time-slots per each PRPP 302. This cycle of loading 4 time-slot set per PRPP 302 occurs 32 times per 125 microsec frame corresponding to the maximum port rate of 128 time-slots (32x4=128) per frame at 16 MHz. During the loading of registers A - D, the outputs of registers A' - D' are being shifted out at a 4 MHz rate and are processed by the Data Processor Section. Odd parity is generated over bits 0 - 14 of the time-slot in this section. A pulse is received on PRPGEN, coincident with the PRSHFT4 pulse, marking the current bit as bit 15. At this point the calculated parity is passed to the MUX 310 to be sent out on PHRCV 350. The Data Processor section also implements a multiplexing function, based upon the programmed rate, using one of three different rate clock enable signals (4, 8 and 16 MHz) available to the PRPP 302 for use in the final stage of clocked output. Up until this final stage, all circuitry and therefore the control signals controlling it, function in the same way and at the same frequency regardless of the programmed rate of the receive port. A selection is also made in the Data Processor section of an appropriate clock for the port in question based on the programmed rate.

With regard to multiplexing, the MUX 310 shown in FIG. 3 has a selector field that cycles at the maximum 16 MHz rate regardless of the software programmed rate for a given port, rate of multiplexing is controlled by the frequency of the clock enable signal used in the final stage of output. A clock enable of 16 MHz results in the bit interleaved multiplexing of all four 4 MHz serial bit-streams received from the data storage section into a single 16 MHz serial output bit-stream. A clock enable of 8 MHz results in the bit interleaved multiplexing of two (register A' and C'), 4 MHz serial bit-streams received from the data storage section into a single 8 MHz serial output bit-stream. A clock enable of MHz results in the selection of one (register A') 4 MHz serial bit-stream to be passed through to the PRPP output 350.

Locating the PRPP personality selections as close to the outer edges of each interface module 204 as is possible reduces the amount of logic required to operate in more than one mode and therefore reduces its over-all complexity.

Referring now to FIG. 4, the transmit portion of the interface module will be described. There are 16 Transmit Port Processors, PTPP, 402, which correspond to the 16 PHDB port interfaces. Each PTPP 402 processes data only in the transmit direction. The function of each PTPP 402 is to manage the flow of serial bit interleaved data from a protocol handler on one of the data links 206₀-206_{N} while converting it to a 16 bit parallel format before being passed on to the Transmit portion of the fabric 202.

The PTPP 402 can be broken down into two functional sub-sections: Data Sample and Data Processing. The Data Sample sections performs the initial clocked sample on data as it enters the interface module 204. Because received data can appear at one of three different rates, 3 different transmit clock enable signals, at three different frequencies (4 MHz, 8 MHz, and 16 MHz), are available to choose from based on the state of PRCTL[1:0]. Each enable signal is one 32 MHz clock cycle in width and all are positioned for full edge transfer.

The data processing section of PTPP 402 includes both the de-multiplexing/de-interleave and the parity checking functions. The interleave sub-circuit functions at the maximum 16 MHz rate regardless of the programmed rate of the port.

Under control of the Timing Control sub-circuit 301, PTPP registers A - D are loaded at a 4 MHz rate directed by four individual clock enable signals that are offset from each other by a single 16 MHz clock cycle. When the port is operated at the maximum 16 MHz rate, each register samples one of the four unique imbedded 4 MHz data streams. When the port is operated at an 8 MHz rate, and there are only two imbedded 4 MHz data streams, registers A and B receive one of them and register C and D the other. When the port is operated at a 4 MHz rate, and there is only one imbedded 4 MHz data stream, all four registers (A - D) receive the same data stream. In reduced bandwidth configurations where multiple copies of the same data appear ready for transport into the Transmit portion of the switch fabric data RAM (not shown), the Transmit time-slot select RAM (not shown) should be initialized such that the additional time-slots connect to alternate sink locations so they do not waste a network side connection.

Once registers A - D for all 16 PTPPs have shifted in 16 bits of time-slot aligned data, their contents are copied to their prime register via signal TXFREN and the shifting process is repeated. During the time when serial data is being shifted into register A - D, registers A' - D' are being transferred, in parallel format, to the transmit portion of the switch fabric 202 (not shown in FIG. 4). Under control of the transmit timing control (TTC) 401, register A' of all PTPPs 402, are read first, followed by register B' of all PTPPs, and so on until all registers of all PTPPs have been read. The cycle time for each of these processes is 3.906 microsec.

Parity checking is performed on a per time-slot basis by four independent serial parity checkers that operate at 4 MHz on groups of 32 time-slots. The output of the parity checkers are OR'ed together such that any one parity checker circuit can cause the composite PTPP error output (PTPE) to activate. When a PTPP error output is activated, a corresponding bit in the PPESR will be set. If the maximum 16 MHz rate is used, all four parity checkers sample (and check) independent data streams. In reduced bandwidth scenarios (4 and 8 MHz), some parity checkers sample (and check) the same data stream, but this is not seen as a disadvantage. Rather, it would take more logic to keep it from happening and in reduced bandwidth scenarios therefore a voting scheme is provided for parity checking.

Thus, it will now be understood that there has been disclosed a method and apparatus for a method and apparatus for providing selectable speed data links in a telecommunication system. While the invention has been particularly illustrated and described with reference to preferred embodiments thereof, it will be understood by those skilled in the art that various changes in form, details, and applications may be made therein. It is accordingly intended that the appended claims shall cover all such changes in form, details and applications which do not depart from the true scope of the invention.

## Claims

1. An apparatus comprising:
an interface module having a receiving portion;
a transmitting portion;
said transmitting portion having a plurality of parity checkers with each parity checker checking parity on a per time slot basis
wherein said receiving portion and said transmitting portion have selectable data rates.

2. The apparatus of claim 1, wherein said selectable data rates are a base data rate and multiples of two of the base data rate.

3. The apparatus of claim 2 wherein the base rate is 4 mega bits per second, and the higher rates are 8 mega bits per second and 16 mega bits per second.

4. The apparatus of claim 2 wherein:
said receiving portion receives data from a switch fabric in parallel format and outputs data at said selectable data rates in serial format; and
one of said multiple data rates is 16 mega bits per second.

5. An apparatus for communicating data from a switch fabric to N+1 data links, said apparatus comprising:
an interface module having a receiving portion;
said receiving portion receives data from a switch fabric in parallel format and outputs data in serial format;
a transmitting portion;
said transmitting portion has a plurality of parity checkers with each parity checker checking parity on a per time slot basis;
wherein said receiving portion and said transmitting portion have selectable data rates

6. The apparatus of claim 5 wherein said receiving portion has a receiving port processor connected to said N+1 data links, said receiving port processor manages a flow of parallel data received from said switch fabric and converts it from parallel data formats to serial bit interleaved format at one of the selectable data rates.

7. The apparatus of claim 6, wherein said receiving port processor has:
a data storage sub-section; and
a data processing sub-section.

8. The apparatus of claim 7, wherein said data processing sub-section includes means for bit interleaving of 1/4, 1/2, or all of the received time slot data depending upon the data rate selected.

9. The apparatus of claim 5 wherein said receive switching fabric always operates at the fastest of the selectable data rates thereby supplying 128 time-slots of data to said receiving port processor per 125 microsec frame regardless of the selected data rate.

10. The apparatus of claim 5, wherein said transmitting portion has a transmitting port processor connected to said N+1 data links, said transmitting port processor manages a flow of serial data received from said N+1 data links and converts it from serial data format to parallel data format.

11. The apparatus of claim 5, wherein said transmitting portion has a plurality of parity checkers with each parity checker checking parity on a per time slot basis.
